# EUROPÄISCHE PATENTANMELDUNG

(11) **EP 2 293 024 A2**
(43) Veröffentlichungstag der Anmeldung: **09.03.2011**
(21) Anmeldenummer: 10008948.1
(22) Anmeldetag: 27.08.2010
(51) Int. Cl.: G01F 1/36

(54) **Vorrichtung und Verfahren zum Durchflussmessen oder -regeln**

(30) Priorität: 08.09.2009 DE 102009040542
(71) Anmelder: Bürkert Werke GmbH, 74653 Ingelfingen (DE)
(72) Erfinder: Dörr, Andreas, D-74673 Mulfingen (DE); Gille, Martin, D-74676 Niedernhall (DE); Gunnesch, Johann, D-74638 Waldenburg (DE)
(74) Vertreter: Prinz & Partner

(57) **Zusammenfassung**

Eine Durchflussmess- oder -regelvorrichtung, vorzugsweise für Flüssigkeiten, umfasst einen Grundkörper (10), in dem ein Hauptströmungskanal (12) mit Mediumeingang (14) und -ausgang (16) gebildet ist. Die Vorrichtung umfasst ferner ein Mittel im Hauptströmungskanal (12) zur Druckabfallerzeugung zwischen zwei vom Hauptströmungskanal (12) abgezweigten Kanälen (18, 20). Die beiden Kanäle (18, 20) führen zu Kammern (22, 24), in denen jeweils eine Absolutdruckmesszelle (26, 28) angeordnet ist. Es wird die Differenz zwischen den beiden gemessenen Absolutdrücken gebildet.

## Beschreibung

Die Erfindung betrifft eine Durchflussmess- oder -regelvorrichtung, vorzugsweise für Flüssigkeiten. Die Erfindung betrifft ferner ein Verfahren zur Einstellung der maximalen Druckdifferenz in einer solchen Durchflussmess- oder -regelvorrichtung.

Es sind mehrere Arten von Durchflussmessgeräten bekannt, die mit ganz unterschiedlichen Messverfahren, wie Flügelrad, MID, Ultraschall, Coriolis, Vortex oder Differenzdruck, arbeiten. Jedes Messprinzip hat gewisse Vor- und Nachteile und wird je nach Anwendungsfall ausgewählt.

Es sind auch Durchflussmessgeräte bekannt, die auf einer Differenzdruckmessung basieren. Üblicherweise werden hier von einem Hauptströmungskanal zwei Kanäle abgezweigt, zwischen welchen Druckabfall-Erzeugungsmittel im Hauptströmungskanal angeordnet sind. Mittels einer Differenzdruckzelle, die von zwei Seiten mit Druck beaufschlagbar ist, wird der Differenzdruck bestimmt.

Aufgabe der Erfindung ist es, eine kostengünstige, kompakte Durchflussmess- oder -regelvorrichtung anzugeben, die auf dem Prinzip der Differenzdruckmessung basiert und hohen Messanforderungen genügt.

Die Aufgabe der Erfindung wird durch eine Durchflussmess- oder -regelvorrichtung mit den Merkmalen des Anspruchs 1 gelöst. Vorteilhafte und zweckmäßige Ausgestaltungen der erfindungsgemäßen Vorrichtung sind in den Unteransprüchen angegeben.

Erfindungsgemäß wird in der Durchflussmess- oder -regelvorrichtung der Differenzdruck bestimmt über eine Messung mittels zweier einzelner Absolutdruckmesszellen, wodurch eine hohe Genauigkeit und Dynamik erreicht wird.

Besonders vorteilhaft ist eine Ausführungsform der Erfindung, bei der der Hauptströmungskanal einen auswechselbaren Einsatz mit einer Blende als Mittel zur Druckabfallerzeugung aufweist, die zwischen den beiden vom Hauptströmungskanal abgezweigten Kanälen angeordnet ist, so dass ein Differenzdruck erzeugt wird. Je nach Anwendung können im selben Grundkörper Einsätze mit verschiedenen Blenden verwendet werden, um einen gewünschten Druckabfall zu erzeugen. Die Einsätze können als separate Bauteile leicht entnommen und eingesetzt werden, was einen einfachen Austausch ermöglicht und die Reinigung erheblich vereinfacht.

Um eine lagerichtige Montage des Blenden-Einsatzes zu gewährleisten, weisen bei der bevorzugten Ausführungsform der Einsatz und der Hauptströmungskanal mindestens je ein radiales Positioniermittel auf, wobei diese Positioniermittel miteinander zusammenwirken.

Um Schmutzpartikel abzuhalten, die die Messungen beeinflussen könnten, ist die Anordnung eines Doppelsiebs mit einem feinen Sieb und einem Stützsieb im Hauptströmungskanal auf der Seite des Mediumeingangs vorteilhaft. Das Doppelsieb lässt sich einfach reinigen bzw. austauschen.

Die Erfindung schafft auch ein Verfahren zur Einstellung der maximalen Druckdifferenz in einer erfindungsgemäßen Durchflussmess- oder -regelvorrichtung, bei dem mittels Iteration in Abhängigkeit von Parametern wie Mediumdichte, gewünschter Absolutdruck, Durchflussrate und Blendendurchmesser diese Druckdifferenz auf ein definiertes Ausgangssignal eingestellt wird. Durch die Einstellung des Ausgangssignals der Differenzdruckmessung lässt sich das Signal an den vorhandenen Druckabfall anpassen. Diese Anpassungsmöglichkeit hat den Vorteil, dass insgesamt nur wenige verschiedene Blenden benötigt werden, um einen weiten Anwendungsbereich abzudecken.

Die Erfindung wird nachfolgend anhand einer bevorzugten Ausführungsform unter Bezugnahme auf die beigefügten Zeichnungen beschrieben. In den Zeichnungen zeigen:
- Figur 1 eine perspektivische Schnittansicht einer erfindungsgemäßen Durchflussmess- oder -regelvorrichtung ohne Elektronikeinheit;
- Figur 2 die Durchflussmess- oder -regelvorrichtung aus Figur 1 mit Elektronikeinheit und Kabel; und
- Figur 3 eine perspektivische Schnittansicht eines auswechselbaren Einsatzes mit einer Blende für eine erfindungsgemäße Durchflussmess- oder -regelvorrichtung.

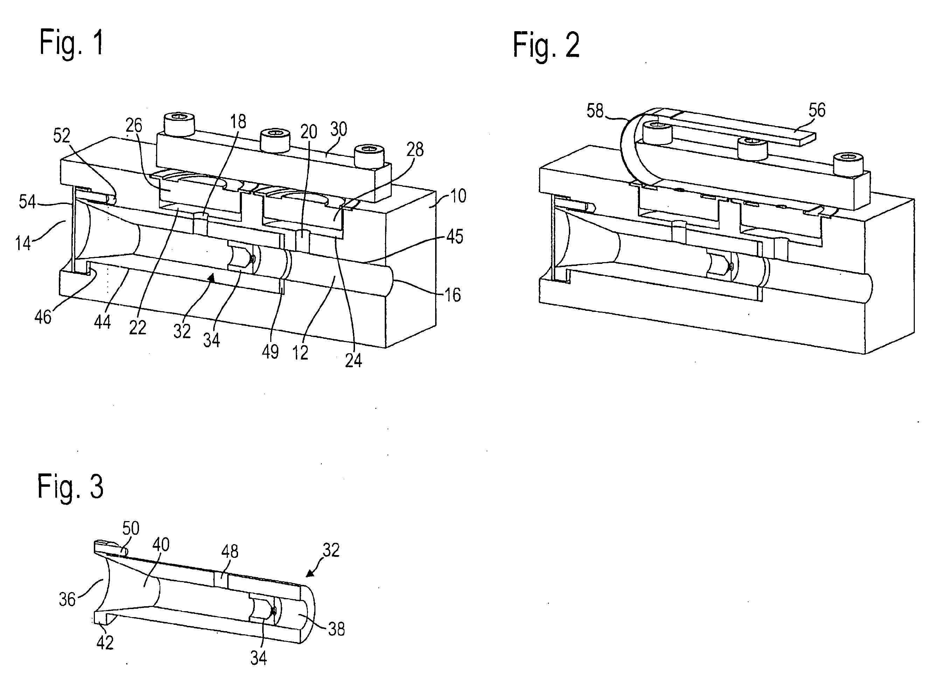

Die in Figur 1 ohne und in Figur 2 mit Elektronikeinheit und Anschlusskabel dargestellte Vorrichtung ist zum Durchflussmessen oder -regeln eines Mediums, vorzugsweise einer Flüssigkeit, vorgesehen. In einem Grundkörper 10 ist ein Hauptströmungskanal 12 mit einem Mediumeingang 14 und einem Mediumausgang 16 (bezogen auf die Strömungsrichtung des Mediums) gebildet.

Vom Hauptströmungskanal 12 zweigen zwei in Strömungsrichtung voneinander beabstandete Kanäle 18, 20 ab, die zu getrennten Kammern 22, 24 im Grundkörper 10 führen. In den Kammern 22, 24 ist jeweils eine Absolutdruckmesszelle 26 bzw. 28 angeordnet. Mit den aufeinander abgestimmten Absolutdruckmesszellen 26, 28 kann jeweils ein absoluter Druck gemessen werden. Die Absolutdruckmesszellen 26, 28 sind mittels einer Befestigungseinrichtung 30, hier in Form eines Niederhalters, in den Kammern 22, 24 des Grundkörpers 10 fixiert.

Die Vorrichtung umfasst ferner einen auswechselbaren Einsatz 32 mit einer Blende 34 als Mittel zur Druckabfallerzeugung, der in Figur 3 einzeln dargestellt ist. Der Einsatz 32 ist rohrförmig und hat eine Mediumeingangsseite 36 und eine Mediumausgangsseite 38, zwischen denen eine den Strömungsquerschnitt verkleinernde Blende 34 vorgesehen ist. An der Mediumeingangsseite 36 weist der Einsatz 32 einen (bezogen auf den Querschnitt) erweiterten Abschnitt 40 mit einem Flansch 42 auf.

Der Einsatz 32 mit der Blende 34 ist in einem erweiterten Aufnahmeabschnitt 44 des Grundkörpers 10 aufgenommen, der stromaufwärts einer Bohrung 45 im Grundkörper 10 gebildet ist, welche einen kleineren Durchmesser hat. Der durch den Innendurchmesser des Einsatzes radial begrenzte Hauptströmungskanal 12 geht somit stromabwärts des Einsatzes 32 in die Bohrung 45 über.

Der erweiterte Aufnahmeabschnitt 44 weist am Mediumeingang 14 eine weitere Aufweitung unter Ausbildung einer Stufe 46 auf, an der der Flansch 42 des Einsatzes 32 anliegt. Der Einsatz 32 ist so angeordnet, dass sich die Blende 34 zwischen den beiden vom Hauptströmungskanal 12 abgezweigten Kanälen 18, 20 befindet.

Ein oder mehrere Durchbrüche in der Rohrwand des Einsatzes 32 sorgen ggf. für eine Strömungsverbindung vom Inneren des Einsatzes 32 zu dem bzw. den Kanälen 18, 20 im Grundkörper 10. Beim dargestellten Ausführungsbeispiel weist der Einsatz 32 stromaufwärts zur Blende 34 eine radiale Öffnung 48 auf, die mit demjenigen der abgezweigten Kanäle 18, 20 im Hauptströmungskanal 12 fluchtet, der zum Mediumeingang 14 benachbart ist.

Der Hauptströmungskanal 12 hat an den beiden Stellen, an denen die Kanäle 18, 20 abzweigen, den gleichen Durchmesser. Beim dargestellten Ausführungsbeispiel ist dementsprechend der Innendurchmesser des Einsatzes 32 an der Abzweigung des Kanals 18 genauso groß wie der Durchmesser der Bohrung 45 im Grundkörper 10 an der Abzweigung des Kanals 20.

Auf der Mediumausgangsseite 38 des Einsatzes 32 ist am Ende des erweiterten Aufnahmeabschnitts 44 zwischen dem Einsatz 32 und der Bohrung 45 ein Dichtelement 49 angeordnet. Das Dichtelement 49 sorgt für eine Abdichtung zwischen dem erweiterten Aufnahmeabschnitt 44 und der Bohrung 45, wodurch sichergestellt ist, dass das Medium nicht am Einsatz 32 vorbei (ohne Passieren der Blende 34) in die Bohrung 45 gelangt.

Der Einsatz 32 und der Grundkörper 10 weisen mindestens je ein radiales Positioniermittel 50 bzw. 52 auf. Die Positioniermittel 50, 52 wirken zusammen und legen die Orientierung des Einsatzes 32 fest. Bei der dargestellten bevorzugten Ausführungsform hat der Einsatz 32 einen Führungsstift 50, der in eine passende Ausnehmung 52 des Grundkörpers 10 eingreift.

Der Öffnungsquerschnitt der Blende 34 beträgt bei der dargestellten bevorzugten Ausführungsform je nach Anwendung etwa 0,05 mm bis 5 mm.

Im Hauptströmungskanal 12 ist auf der Seite des Mediumeingangs 14 in der Aufweitung des Hauptströmungskanals 12 ein Doppelsieb 54 angeordnet. Das Doppelsieb 54, das zur Filterung von Schmutzpartikeln dient, weist ein feines Sieb und ein Stützsieb in Form zweier Gitter auf. Das Doppelsieb 54 ist auf einer Flanschplatte angebracht, die mit dem Grundkörper 10 verschraubt ist und das Doppelsieb 54 so in Position hält. Bei Bedarf kann das Doppelsieb 54 entfernt und wieder eingesetzt werden, insbesondere für Reinigungszwecke.

Die beiden Absolutdruckmesszellen 26, 28 sind an eine Elektronikeinheit 56 angeschlossen, die in Figur 2 gezeigt ist. Die Elektronikeinheit 56 kann weitere Komponenten umfassen, die über ein Kabel 58 verbunden sind. In der Elektronikeinheit 56 wird die Differenz aus den beiden von den Absolutdruckmesszellen 26, 28 gemessenen Drücke berechnet. Wie bereits erwähnt, dient die Blende 34 in dem auswechselbaren Einsatz 32 als Mittel zur Druckabfallerzeugung. Aus dem Differenzdruck und weiteren (bekannten) Parametern kann dann die Durchflussmenge des durch den Hauptströmungskanal 12 strömenden Mediums bestimmt werden. Hierzu kann in einem Zwischenschritt auch die Wurzel aus der Differenz der beiden von den Absolutdruckmesszellen 26, 28 gemessenen Drücke berechnet werden.

Die Elektronikeinheit 56 ermöglicht es, das Ausgangssignal der Differenzdruckmessung an den vorhandenen Druckabfall anzupassen. Hierzu wird die maximale Druckdifferenz in der Durchflussmess- oder -regelvorrichtung mittels Iteration in Abhängigkeit von Parametern wie Mediumdichte, gewünschter Absolutdruck, Durchflussrate und Blendendurchmesser auf ein definiertes Ausgangssignal eingestellt.

## Patentansprüche

1. Durchflussmess- oder -regelvorrichtung, vorzugsweise für Flüssigkeiten, mit
einem Grundkörper (10), in dem ein Hauptströmungskanal (12) mit Mediumeingang (14) und -ausgang (16) gebildet ist,
einem Mittel im Hauptströmungskanal (12) zur Druckabfallerzeugung zwischen zwei vom Hauptströmungskanal (12) abgezweigten Kanälen (18, 20),
wobei die beiden Kanäle (18, 20) zu Kammern (22, 24) führen, in denen jeweils eine Absolutdruckmesszelle (26, 28) angeordnet ist, und
wobei die Differenz zwischen den beiden gemessenen Absolutdrücken gebildet wird.

2. Durchflussmess- oder -regelvorrichtung nach Anspruch 1, **dadurch gekennzeichnet, dass** der Hauptströmungskanal (12) einen auswechselbaren Einsatz (32) mit einer Blende (34) als Mittel zur Druckabfallerzeugung aufweist, die zwischen den beiden vom Hauptströmungskanal (12) abgezweigten Kanälen (18, 20) angeordnet ist, so dass ein Differenzdruck erzeugt wird.

3. Durchflussmess- oder -regelvorrichtung nach Anspruch 2, **dadurch gekennzeichnet, dass** der Hauptströmungskanal (12) einen erweiterten Aufnahmeabschnitt (44) zur Aufnahme des auswechselbaren Einsatzes (32) aufweist.

4. Durchflussmess- oder -regelvorrichtung nach Anspruch 3, **dadurch gekennzeichnet, dass** der Einsatz (32) rohrförmig ist und an seiner Mediumeingangsseite (36) einen Flansch (42) aufweist.

5. Durchflussmess- oder -regelvorrichtung nach Anspruch 4, **dadurch gekennzeichnet, dass** der erweiterte Aufnahmeabschnitt (44) des Hauptströmungskanal (12) eine weitere Aufweitung unter Ausbildung einer Stufe (46) aufweist, an dem der Flansch (42) des Einsatzes (32) anliegt.

6. Durchflussmess- oder -regelvorrichtung nach einem der Ansprüche 2 bis 5, **gekennzeichnet durch** ein Dichtelement (49) zur Abdichtung des Einsatzes (32) im Grundkörper (10).

7. Durchflussmess- oder -regelvorrichtung nach einem der vorstehenden Ansprüche, **dadurch gekennzeichnet, dass** der Einsatz (32) und der Grundkörper (10) mindestens je ein radiales Positioniermittel (50, 52) aufweisen, wobei diese Positioniermittel (50, 52) miteinander zusammenwirken.

8. Durchflussmess- oder -regelvorrichtung nach einem der vorstehenden Ansprüche, **dadurch gekennzeichnet, dass** der Öffnungsquerschnitt der Blende (34) 0,05 mm bis 5 mm beträgt.

9. Durchflussmess- oder -regelvorrichtung nach einem der vorstehenden Ansprüche, **dadurch gekennzeichnet, dass** der Einsatz (32) stromaufwärts zur Blende (34) eine radiale Öffnung (48) aufweist, die mit dem abgezweigten Kanal im Hauptströmungskanal (12) fluchtet, der zum Mediumeingang (14) benachbart ist.

10. Durchflussmess- oder -regelvorrichtung nach einem der vorstehenden Ansprüche, **dadurch gekennzeichnet, dass** der Hauptströmungskanal (12) an den beiden Stellen, an denen die Kanäle (18, 20) abzweigen, den gleichen Durchmesser hat.

11. Durchflussmess- oder -regelvorrichtung nach einem der vorstehenden Ansprüche, **dadurch gekennzeichnet, dass** im Hauptströmungskanal (12) auf der Seite des Mediumeingangs (14) ein Doppelsieb (54) mit einem feinen Sieb und einem Stützsieb angeordnet ist.

12. Durchflussmess- oder -regelvorrichtung nach einem der vorstehenden Ansprüche, **dadurch gekennzeichnet, dass** die beiden Absolutdruckmesszellen (26, 28) an eine Elektronikeinheit (56) angeschlossen sind, und dort die Differenz aus den beiden von den Absolutdruckmesszellen (26, 28) gemessenen Drücke berechnet wird.

13. Durchflussmess- oder -regelvorrichtung nach Anspruch 12, **dadurch gekennzeichnet, dass** die Wurzel aus der Differenz der beiden von den Absolutdruckmesszellen (26, 28) gemessenen Drücke berechnet wird.

14. Verfahren zur Einstellung der maximalen Druckdifferenz in einer Durchflussmess- oder -regelvorrichtung nach einem der vorstehenden Ansprüche, **dadurch gekennzeichnet, dass** mittels Iteration in Abhängigkeit von Parametern wie Mediumdichte, gewünschter Absotutdruck, Durchflussrate und Blendendurchmesser diese Druckdifferenz auf ein definiertes Ausgangssignal eingestellt wird.
